# EUROPÄISCHE PATENTSCHRIFT

(11) **EP 2 017 023 B1**
(45) Veröffentlichungstag und Bekanntmachung des Hinweises auf die Patenterteilung: **24.02.2010**
(21) Anmeldenummer: 07013982.9
(22) Anmeldetag: 17.07.2007
(51) Int. Cl.: B23B 13/02, B23Q 1/76, B23Q 7/05

(54) **Maschinelle Anordnung zum Bearbeiten von stabartigen Werkstücken mit einer Einrichtung zur Werkstückabstützung**
Machine assembly for machining rod-shaped workpieces with a device for workpiece support
Installation mécanique destinée au traitement de pièces à usiner de type barre dotée d'un dispositif destiné au support de pièces à usiner

(43) Veröffentlichungstag der Anmeldung: 21.01.2009
(73) Patentinhaber: TRUMPF Werkzeugmaschinen GmbH + Co. KG, 71254 Ditzingen (DE)
(72) Erfinder: Dilger, Werner, 71229 Leonberg (DE); Karrasch, Ivo, 10367 Berlin (DE)
(74) Vertreter: Kohler Schmid Möbus

(56) Entgegenhaltungen:
- DE-A1- 3 448 040
- DE-A1- 10 249 106
- GB-A- 2 080 160
- GB-A- 2 196 557
- JP-A- 59 069 203
- US-A- 4 566 358

## Beschreibung

Die Erfindung betrifft eine maschinelle Anordnung zum Bearbeiten von stangenartigen Werkstücken, insbesondere von Rohren,
- mit einer Bearbeitungseinrichtung für die Werkstückbearbeitung,
- mit einer Werkstück-Bewegungseinrichtung, mittels derer zu bearbeitende Werkstücke und/oder bearbeitete Werkstücke relativ zu der Bearbeitungseinrichtung bewegbar sind sowie
- mit einer Einrichtung zur Werkstückabstützung, mittels derer ein Werkstück entgegen der Schwerkraftwirkung in Werkstückquerrichtung und dabei mit einer zu der Bearbeitungseinrichtung hin und/oder gegenüber der Werkstück-Bewegungseinrichtung in vertikaler Richtung eingenommenen vertikalen Solllage abstützbar ist,
wobei die Einrichtung zur Werkstückabstützung wenigstens eine Stützrolle aufweist, die mit einer horizontalen Rollendrehachse in Werkstückquerrichtung ausgerichtet ist und die an ihrem um die Rollendrehachse verlaufenden Außenumfang eine Werkstückauflage aufweist, an welcher die vertikale Solllage einnehmende Werkstücke entgegen der Schwerkraftwirkung abstützbar sind.

Eine derartige Anordnung ist bekannt aus DE 34 48 040 A1. Der Stand der Technik betrifft einen Sägeautomaten mit einer Sägestation, welcher zu bearbeitende Werkstücke, vorzugsweise Hohlprofile, mittels einer Beschickungseinrichtung zugeführt werden. Die Beschickungseinrichtung umfasst eine Rollenbahn sowie einen Vorschubwagen mit Spannstock. Mittels einer Querfördereinrichtung wird ein zu bearbeitendes Werkstück auf der Rollenbahn abgelegt. Die in Werkstücklängsrichtung hintereinander angeordneten Einzelrollen der Rollenbahn unterfangen das Werkstück entgegen der Schwerkraftwirkung und positionieren das Werkstück in vertikaler Richtung derart, dass das hintere, von der Sägestation abliegende Werkstückende durch den Spannstock des Vorschubwagens erfasst werden kann. Nach dem Einspannen des hinteren Werkstückendes verfährt der Vorschubwagen mit dem Werkstück in dessen Längsrichtung und positioniert das Werkstück dadurch gegenüber der Sägestation. Bei der Vorschubbewegung des Werkstückes rollen die Einzelrollen der Rollenbahn auf der Werkstückunterseite ab. Dabei drehen sich die Einzelrollen um zentrische Rollendrehachsen. Die von den Einzelrollen der vorbekannten Rollenbahn ausgebildete Werkstückauflage ist in vertikaler Richtung ortsunveränderlich. Die Lage, welche eine im Werkstückinnern liegende Bezugsebene oder Bezugsachse, beispielsweise eine Längsmittelebene oder eine Längsmittelachse des auf der Rollenbahn aufliegenden Werkstückes, in vertikaler Richtung einnimmt, ist folglich abhängig von den Querschnittsabmessungen des Werkstücks.

Eine derartige Abhängigkeit zu vermeiden, ist Aufgabe der vorliegenden Erfindung.

Erfindungsgemäß gelöst wird diese Aufgabe durch die maschinelle Anordnung gemäß Patentanspruch 1. Im Falle der Erfindung ist zur Werkstückabstützung wenigstens eine dreheinstellbare Stützrolle mit einer Werkstückauflage vorgesehen, deren radialer Abstand von der Rollendrehachse sich, in Rollenumfangsrichtung betrachtet, ändert. Eine Verstellung der Stützrolle um die Rollendrehachse geht folglich einher mit einer Verlagerung der Werkstückauflage in vertikaler Richtung. Durch die vertikale Verstellung der Werkstückauflage wiederum können Änderungen der Querschnittsabmessungen von zu lagernden Werkstücken kompensiert werden. Insbesondere die vertikale Lage der Längsmittelachse von Werkstücken, die mittels der oder den erfindungsgemäßen Stützrollen unterfangen werden, kann dementsprechend auch bei wechselnden Querschnittsabmessungen der zu lagernden Werkstücke beibehalten werden, ohne dass zu diesem Zweck das zur Werkstückabstützung verwendete Maschinenelement gegen ein anderes ausgetauscht werden müsste. Beispielsweise ist einem Rundrohr mit verhältnismäßig großem Durchmesser ein Bereich an dem Außenumfang der Stützrolle zugeordnet, dessen Achsabstand kleiner ist als der Achsabstand eines zur Lagerung von Rundrohren mit kleinerem Durchmesser vorgesehenen Bereiches der Werkstückauflage an dem Außenumfang der Stützrolle. Ungeachtet der Durchmesserunterschiede fallen die Längsmittelachsen der beiden Rundrohre bei entsprechender Dreheinstellung der Stützrolle miteinander zusammen.

Praxisrelevant ist die im Falle der Erfindung mögliche Kompensation von Querschnittsänderungen zu bearbeitender oder bearbeiteter Werkstücke für Anwendungsfälle, in denen die vertikale Lage einer von der Werkstückauflage in Werkstückquerrichtung beabstandeten Bezugsebene oder Bezugsachse des Werkstückes für die Abläufe zur Lösung der jeweiligen Bearbeitungsaufgabe von Bedeutung ist. Beispielsweise kann die genannte Bezugsebene oder Bezugsachse an dem Werkstück als Grundlage für die Einstellung von Bearbeitungseinrichtungen in Werkstückquerrichtung dienen. Diese Einstellung von Bearbeitungseinrichtungen vereinfacht sich erheblich, wenn - wie im Falle der Erfindung möglich - von einer konstanten Höhenlage der Bezugsebene bzw. der Bezugsachse an dem Werkstück ausgegangen werden kann. Von besonderer praktischer Bedeutung ist das erfindungsgemäße Konzept auch für maschinelle Anordnungen, deren Werkstück-Bewegungseinrichtung eine Werkstückeinspannung mit einem in vertikaler Richtung ortsunveränderlichen Einspannzentrum aufweist. Für diesen Fall kann erfindungsgemäß gewährleistet werden, dass die Werkstückmitte, insbesondere eine Längsmittelachse der auf der oder den erfindungsgemäßen Stützrollen gelagerten Werkstücke unabhängig von deren Querschnittabmessungen in vertikaler Richtung in dem Einspannzentrum der Werkstückeinspannung liegt.

Besondere Ausführungsarten der Erfindung gemäß Patentanspruch 1 ergeben sich aus den abhängigen Patentansprüchen 2 bis 10.

Die Erfindungsbauart nach Patentanspruch 2 ist insbesondere in fertigungstechnischer Hinsicht vorteilhaft. Eine Werkstückauflage mit geradlinigen Auflageabschnitten lässt sich insbesondere mit einem zylindrischen spanabhebenden Fräswerkzeug aus dem vollen Material eines kreiszylindrischen Rohlings für eine Stützrolle herausarbeiten. Jeder Auflagenabschnitt besitzt dabei in Umfangsrichtung der Stützrolle eine gewisse Länge und kann daher dem zu unterfangenden Werkstück ein besonders funktionssicheres Auflager bieten.

Erfindungsgemäß denkbar sind allerdings auch Stützrollen, deren Werkstückauflage stetig um die Rollendrehachse verläuft. Derartige stufenlose Werkstückauflagen lassen sich beispielsweise in Gusstechnik herstellen. Patentanspruch 3 betrifft eine Stützrollenbauart, die mit ihrer spiralförmig um die Rollendrehachse verlaufenden Werkstückauflage in besonderem Maße auf die in der betrieblichen Praxis zu bewältigenden Bearbeitungsaufgaben abgestimmt ist.

Im Falle der erfindungsgemäßen Anordnung nach Patentanspruch 4 ist die mittels einer oder mehrerer Stützrollen realisierte Werkstücklagerung in Schwerkraftrichtung vorteilhafterweise verbunden mit einer seitlichen Werkstückabstützung.

Damit eine möglichst spielfreie seitliche Werkstückabstützung bei wechselnden Querschnittsabmessungen der Werkstücke gewährleistet werden kann, ist in Weiterbildung der Erfindung das kennzeichnende Merkmal von Patentanspruch 5 vorgesehen. Anspruchsgemäß ändert sich der Querschnitt der zur Ausbildung der Werkstückauflage dienenden Umfangsnut der Stützrolle abgestimmt auf die Änderung des Achsabstandes der Werkstückauflage.

Gemäß Patentanspruch 6 besitzt die Umfangsnut an dem Außenumfang der Stützrolle mehrere in Umfangsrichtung der Stütztrolle aufeinander folgende Nutabschnitte, die jeweils über die gesamte Nutabschnittslänge einen konstanten Nutquerschnitt aufweisen. Einzelne Nutabschnitte können unmittelbar ineinander übergehen oder aber in Umfangsrichtung der Stützrolle voneinander beabstandet sein. Das Anspruchsmerkmal ist insbesondere in Fällen von Vorteil, in denen die Stützrolle bei unterfangenem Werkstück eine Drehbewegung um die Rollendrehachse ausführt. Ohne dass sich der Nutquerschnitt, welcher das Werkstück aufnimmt, ändert, kann die Rollendrehbewegung maximal über einen Drehwinkel erfolgen, welcher dem Umfangswinkel entspricht, über den sich der betreffende Nutabschnitt der Umfangsnut an dem Außenumfang der Stützrolle erstreckt. Ungeachtet einer derartigen Drehbewegung der Stützrolle bleibt eine im Wesentlichen spielfreie seitliche Abstützung des von der Stützrolle unterfangenen Werkstückes erhalten bzw. wird ein Verklemmen des unterfangenen Werkstückes in einem Nutabschnitt mit zu kleinem Nutquerschnitt vermieden. Bei entsprechendem Verlauf der Werkstückauflage um die Rollendrehachse ändert sich die vertikale Lage des auf der Stützrolle aufliegenden Werkstückes bei der begrenzten Drehbewegung der Stützrolle nur unerheblich. Bildet der betreffende Nutabschnitt einen Abschnitt der Werkstückauflage aus, dessen Achsabstand über den Umfangswinkel des Nutabschnittes konstant ist, so bleibt die Höhenlage des unterfangenen Werkstückes bei der begrenzten Drehbewegung der Stützrolle gänzlich unverändert.

In weiterer bevorzugter Ausgestaltung der Erfindung besitzt die Umfangsnut der Stützrolle einen Kreissegmentquerschnitt (Patentanspruch 7). Derartige Stützrollen können insbesondere zur Lagerung von bezüglich ihrer Längsachse rotationssymmetrischen Werkstücken dienen und derartige Werkstücke auch bei Drehbewegungen um die Werkstückachse sowohl in Schwerkraftrichtung als auch seitlich abstützen.

An der maschinellen Anordnung gemäß Patentanspruch 8 sind eine oder mehrere Stützrollen in Werkstückquerrichtung anhebbar und/oder absenkbar. Die anspruchsgemäße Beweglichkeit der Stützrollen ist in mehrerlei Hinsicht von Vorteil. Beispielsweise können die Stützrollen angehoben oder abgesenkt werden, um auf diesem Wege in vertikaler Richtung ihre Grundeinstellung zu verändern, von der ausgehend die Stützrollen um ihre Rollendrehachse zugestellt werden. Auch gestattet es die anspruchsgemäße Beweglichkeit der Stützrollen in vertikaler Richtung die Stützrollen beispielsweise aus der Bewegungsbahn der Werkstück-Bewegungseinrichtung herauszubewegen und anschließend mit der Werkstück-Bewegungseinrichtung zu überfahren.

Im Interesse einer möglichst weit reichenden Mechanisierung bzw. Automatisierung der Gesamtanordnung ist gemäß Patentanspruch 9 ein motorischer Stellantrieb zum Zustellen der Stützrolle(n) um die Rollendrehachse vorgesehen.

Zur Minimierung des konstruktiven Aufwandes und der mit der konstruktiven Umsetzung verbundenen Kosten übernimmt im Falle der Erfindungsbauart nach Patentanspruch 10 ein einzelner Antriebsmotor die Einstellung von wenigstens zwei Stützrollen um die Rollendrehachse.

Nachfolgend wird die Erfindung anhand schematischer Darstellungen zu einem Ausführungsbeispiel näher erläutert. Es zeigen:
- Figur 1: eine maschinelle Anordnung zum schneidenden Bearbeiten von Rohren vor Beginn der Rohrbearbeitung,
- Figur 2: die maschinelle Anordnung gemäß Figur 1 während der Rohr- bearbeitung,
- Figur 3: ein mit einer Stützrolle zur Rohrabstützung versehenes Modul der maschinellen Anordnung gemäß den Figuren 1 und 2,
- Figur 4: die Stützrolle des Moduls gemäß Figur 3 und
- Figuren 5 und 6: Darstellungen zur Veranschaulichung der Funktionsweise der Stützrolle gemäß Figur 4.

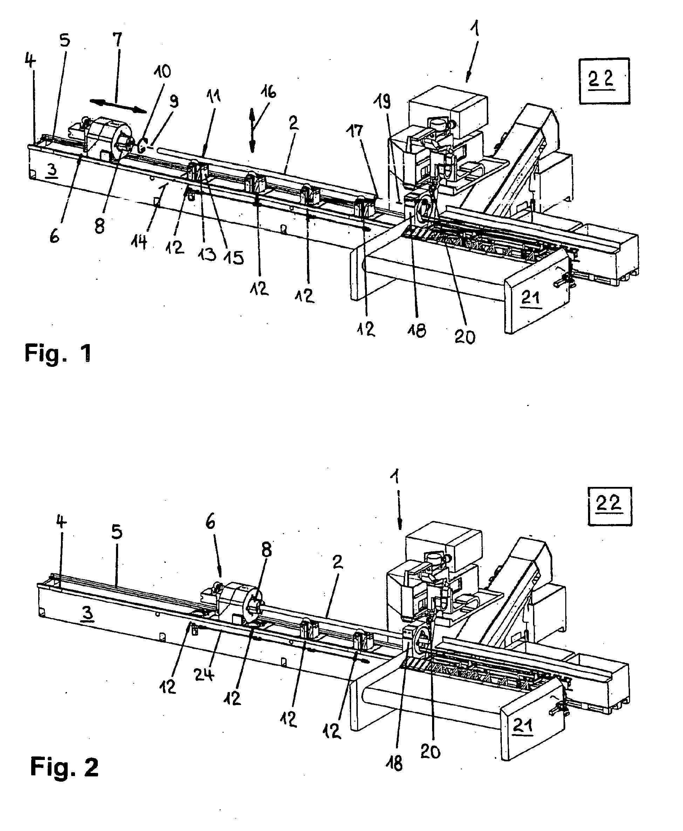

Ausweislich Figur 1 umfasst eine maschinelle Anordnung 1 zum schneidenden Bearbeiten von Rohren 2 ein Maschinenbett 3 mit Führungsschienen 4, 5 für eine als Werkstück-Bewegungseinrichtung dienende Dreh-/Vorschubstation 6. Die Dreh- /Vorschubstation 6 ist motorisch angetrieben in Richtung eines Doppelpfeils 7 auf den Führungsschienen 4, 5 verfahrbar. An der zu dem Rohr 2 hin weisenden Seite weist die Dreh-/Vorschubstation 6 ein selbstzentrierendes Spannfutter 8 auf. Eine durch das Spannzentrum des Spannfutters 8 verlaufende Spannachse 9 des Spannfutters 8 ist strichpunktiert angedeutet. Um die Spannachse 9 ist das Spannfutter 8 in Richtung eines Doppelpfeils 10 gesteuert drehbar. Figur 1 zeigt das Spannfutter 8 in geöffnetem Zustand.

Das zu bearbeitende Rohr 2 wird von einer in das Maschinenbett 3 integrierten Einrichtung 11 zur Werkstückabstützung entgegen der Schwerkraftwirkung unterfangen. In dem dargestellten Beispielsfall umfasst die Einrichtung 11 zur Werkstückabstützung insgesamt vier Module in Form von Rohrunterstützungen 12. Jede der Rohrunterstützungen 12 weist eine Stützrolle 13 auf mit einer quer zu dem Rohr 2 und dabei in horizontaler Richtung verlaufenden Rollendrehachse 14. An dem Außenumfang der Stützrollen 13 ist das Rohr 2 in Schwerkraftrichtung gelagert. Jede der Stützrollen 13 ist an einer Tragstruktur 15 angebracht und gemeinschaftlich mit dieser in Richtung eines Doppelpfeils 16, d.h. in vertikaler Richtung, anhebbar und absenkbar. Bei abgesenkter Tragstruktur 15 liegt die betreffende Stützrolle 13 unterhalb des Niveaus der an dem Maschinenbett 3 montierten Führungsschienen 4, 5 für die Dreh- /Vorschubstation 6. Sind die Tragstrukturen 15 - wie in Figur 1 dargestellt - angehoben, so lagern die Stützrollen 13 das Rohr 2 in vertikaler Richtung derart, dass eine Rohrachse 17 mit der Spannachse 9 des Spannfutters 8 an der Dreh-/Vorschubstation 6 zusammenfällt. Auf den Stützrollen 13 der Rohrunterstützungen 12 wurde das Rohr 2 mittels einer nicht gezeigten Beschickungseinrichtung abgelegt. Der Beschickungseinrichtung wurde das Rohr 2 aus einem gleichfalls nicht dargestellten Rohrmagazin zugeführt.

An der von der Dreh- /Vorschubstation 6 abliegenden Seite des Rohres 2 zeigt Figur 1 ein an dem Maschinenbett 3 ortsfest angebrachtes Durchschiebefutter 18. Eine Führungsachse 19 des Durchschiebefutters 18 fällt in dem gezeigten Betriebszustand der maschinellen Anordnung 1 mit der Rohrachse 17 sowie mit der Spannachse 9 des Spannfutters 8 an der Dreh- /Vorschubstation 6 zusammen.

An der dem Rohr 2 gegenüberliegenden Seite des Durchschiebefutters 18 ist in Figur 1 als Bearbeitungseinrichtung ein Laserschneidkopf 20 vorgesehen, mittels dessen an dem Rohr 2 Ausschnitte in der Rohrwand erstellt und Rohrabschnitte abgelängt werden können. Von dem Restrohr abgetrennte Rohrabschnitte kommen unter Schwerkraftwirkung auf einem Entladetisch 21 zu liegen, von wo aus sie manuell oder unter Einsatz maschineller Hilfsmittel abgeführt werden können.

Die wesentlichen Abläufe an der maschinellen Anordnung 1 werden durch eine numerische Steuerung 22 gesteuert.

Zur Werkstückbearbeitung verfährt die Dreh- /Vorschubstation 6 aus ihrer Position gemäß Figur 1 mit geöffnetem Spannfutter 8 so weit in Richtung auf das in seiner vertikalen Solllage befindliche Rohr 2, bis dessen hinteres Ende innerhalb des Spannfutters 8 zu liegen kommt. Nun wird das Spannfutter 8 geschlossen und dadurch das Rohr 2 an der Dreh- /Vorschubstation 6 geklemmt. Voraussetzung für die funktionsgerechte Klemmung des Rohres 2 ist die Kongruenz der Rohrachse 17 einerseits und der Spannachse 9 des Spannfutters 8 andererseits.

Gemeinschaftlich mit dem eingespannten Rohr 2 bewegt sich die Dreh-/Vorschubstation 6 in Richtung auf den Laserschneidkopf 20. Dabei läuft das Rohr 2 mit seinem vorderen Ende zunächst in das Durchschiebefutter 18 ein, dessen Führungsöffnung auf eine Weite eingestellt ist, welche dem Außendurchmesser des Rohres 2 entspricht. Infolgedessen ergibt sich in radialer Richtung eine spielfreie Lagerung des Rohres 2 an dem Durchschiebefutter 18. In axialer Richtung kann das Rohr 2 mittels der Dreh-/Vorschubstation 6 durch das Durchschiebefutter 18 hindurchbewegt werden. Außerdem ist das Rohr 2 im Innern des Durchschiebefutters 18 um die Rohrachse 17 drehbar. Maßgeblich für die Funktionsfähigkeit des Durchschiebefutters 18 ist die lagebezogene Übereinstimmung der Rohrachse 17 des zu führenden Werkstückes und der Führungsachse 19 des Durchschiebefutters 18.

Durch die beschriebene Verfahrbewegung der Dreh- /Vorschubstation 8 wird das Rohr 2 in axialer Richtung gegenüber dem Laserschneidkopf 20 in die gewünschte Bearbeitungsposition zugestellt. Sollen mit Hilfe des Laserschneidkopfes 20 Rohrabschnitte mit einer Schnittebene abgelängt werden, die senkrecht zu der Rohrachse 17 in Rohrquerrichtung verläuft, so schließt sich an die axiale Zustellbewegung des Rohres 2 bei in axialer Richtung ortsfester Dreh- /Vorschubstation 6 eine Drehbewegung des Spannfutters 8 und damit eine Drehbewegung des Rohres 2 in eine der Richtungen des Doppelpfeils 10 an. Sollen Rohrabschnitte mit einer schräg gegen die Rohrachse 17 ausgerichteten Schnittebene abgelängt werden oder sind an der Wand des Rohres 2 Ausschnitte zu erstellen, so wird einer durch Drehen des Spannfutters 8 erzeugten Drehbewegung des Rohres 2 eine durch Verfahren der Dreh- /Vorschubstation 6 in Richtung des Doppelpfeils 7 bewirkte axiale Rohrbewegung überlagert. Der Laserschneidkopf 20 wird vor Beginn der Rohrbearbeitung in radialer Richtung des Rohres 2 in die zweckgemäße Position zugestellt. Während der schneidenden Bearbeitung von Rohren mit Kreisquerschnitt bleibt der Laserschneidkopf 20 in radialer Rohrrichtung stationär. Bei der Bearbeitung von Rechteckrohren kann der Laserschneidkopf Bewegung in radialer Rohrrichtung ausführen.

Bei dem Rohrvorschub in Richtung auf den Laserschneidkopf 20 nähert sich die Dreh- /Vorschubstation 6 zunächst der ihr in Figur 1 nächstliegenden Rohrunterstützung 12 an. Unmittelbar bevor die Dreh- /Vorschubstation 6 diese Rohrunterstützung 12 erreicht, wird deren Tragstruktur 15 gemeinsam mit der daran gelagerten Stützrolle 13 nach unten bewegt und dadurch in das Maschinenbett 3 versenkt. Die Dreh- /Vorschubstation 6 kann die abgesenkte Rohrunterstützung 12 in Richtung auf den Laserschneidkopf 20 überfahren. Nach dem Überfahren der ersten und vor dem Überfahren der zweiten Rohrunterstützung 12 ist die Dreh- /Vorschubstation 6 in Figur 2 dargestellt. In entsprechender Weise kann die Dreh-/Vorschubstation 6 die weiteren Rohrunterstützungen 12 passieren.

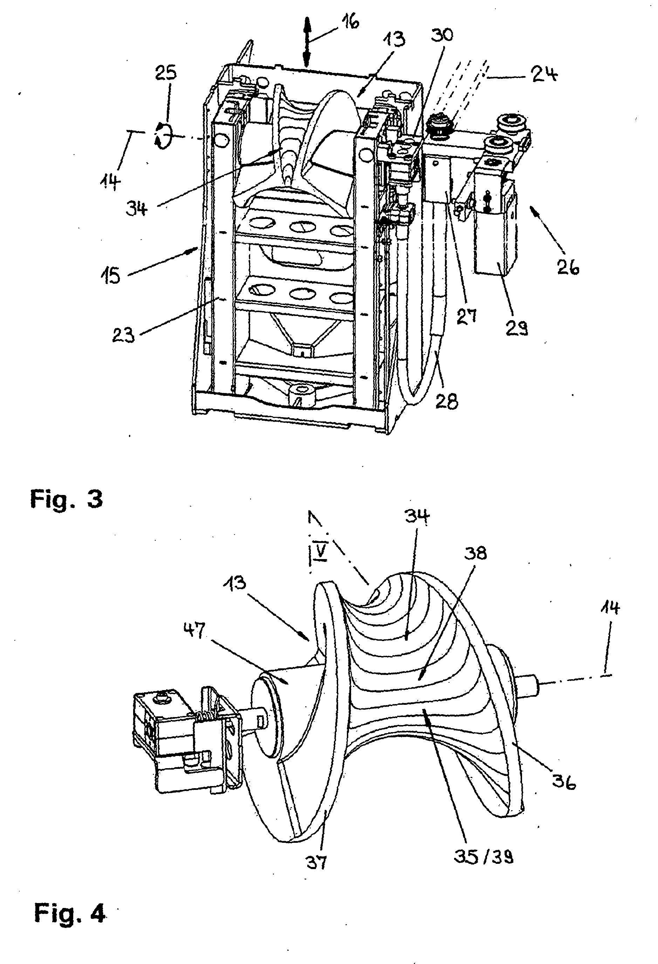

Konstruktiv sind sämtliche Rohrunterstützungen 12 wie in Figur 3 gezeigt gestaltet. Die Tragstruktur 15 umfasst einen Tragrahmen 23, der mittels einer nicht gezeigten pneumatischen Kolben- /Zylindereinheit in Richtung des Doppelpfeils 16 angehoben und abgesenkt werden kann. Zwischen den oberen Enden zweier vertikaler Rahmenholme des Tragrahmens 23 ist die Stützrolle 13 angeordnet. Achszapfen der Stützrolle 13 definieren die Rollendrehachse 14. Um die Rollendrehachse 14 kann die Stützrolle 13 in Richtung eines Doppelpfeils 25 zugestellt werden. Die Zustellung der Stützrolle 13 erfolgt mittels eines steuerbaren motorischen Antriebes 26. Gemäß Figur 3 umfasst der motorische Antrieb 26 eine Kupplung 27 sowie eine biegsame Welle 28. Über die Kupplung 27 steht die biegsame Welle 28 mit einem Antriebsmotor 29 in Verbindung. Der Antriebsmotor 29 dient zur synchronen Dreheinstellung sämtlicher Stützrollen 13 der Einrichtung 11 zur Werkstückabstützung. Zu diesem Zweck ist ein in Figur 3 angedeuteter Zahnriemen 24 vorgesehen, welcher die weiteren Rohrunterstützungen 12 mit dem Antriebsmotor 29 verbindet.

An ihrer Abtriebsseite ist die biegsame Welle 28 mit einem in einem Gehäuse 30 untergebrachten Stellgetriebe gekuppelt. Aufgrund ihrer Flexibilität kann die biegsame Welle 28 ohne weiteres Bewegungen der Stützrolle 13 in Richtung des Doppelpfeils 16 mitvollziehen.

In dem gezeigten Beispielsfall ist das Stellgetriebe für die Stützrolle 13 als Schneckengetriebe ausgeführt. Ein antriebsseitiges Getrieberad wird durch die sich drehende biegsame Welle 28 um eine Radachse angetrieben. Das antriebsseitige Getrieberad wiederum treibt ein stützrollenseitiges Schneckenrad an, das seinerseits mit der Stützrolle 13 fest verbunden ist. Drehbewegungen des antriebsseitigen Getrieberades um die Radachse werden über das stützrollenseitige Schneckenrad in Stellbewegungen der Stützrolle 13 um die Rollendrehachse 14 umgesetzt. Anstelle des vorliegend vorgesehenen Schneckengetriebes sind ohne weiteres auch ein sonstiges Verzahnungsgetriebe oder ein Reibradgetriebe denkbar.

In jedem Fall ist der motorische Antrieb 26 der Stützrollen 13 selbsthemmend. Eine vorgenommene Dreheinstellung der Stützrollen 13 bleibt daher erhalten, ohne dass es zu diesem Zweck besonderer Einrichtungen zur Drehsicherung der Stützrollen 13 bedürfte.

Wie aus den Figuren 3 und 4 hervorgeht, weist die Stützrolle 13 eine um die Rollendrehachse 14 verlaufende Umfangsnut 34 auf. Die Wand der Umfangsnut 34 bildet eine Werkstückauflage 35 aus, an welcher die mittels der Einrichtung 11 zur Werkstückabstützung in Schwerkraftrichtung unterfangenen Rohre 2 gelagert sind. Seitlich werden die gelagerten Rohre 2 durch Nutseitenwände 36, 37 der Stützrolle 13 abgestützt.

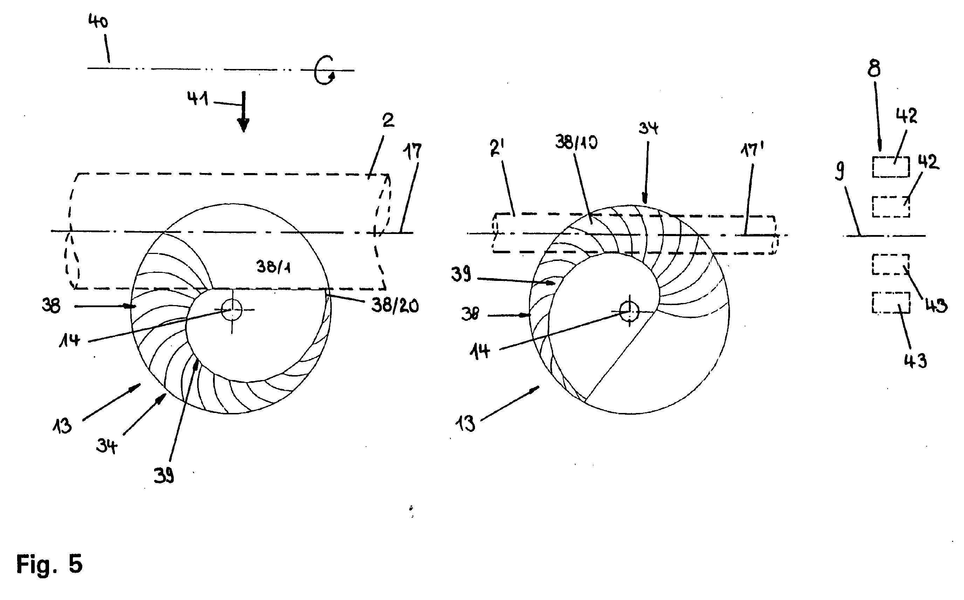

Im Detail ist die Stützrolle 13 der Figuren 3 und 4 in Figur 5 dargestellt. Figur 5 zeigt Schnittdarstellungen der Stützrolle 13 mit einer in Figur 4 angedeuteten, senkrecht zu der Rollendrehachse 14 durch die Mitte der Stützrolle 13 verlaufenden Schnittebene V.

Gemäß Figur 5 umfasst die Umfangsnut 34 eine Mehrzahl - in dem gezeigten Beispielsfall insgesamt zwanzig - Nutabschnitte 38, die um die Rollendrehachse 14 aufeinander folgen. Sämtliche Nutabschnitte 38 besitzen einen kreissegmentförmigen Querschnitt. Die Querschnittsgröße der Nutabschnitte 38 nimmt in Umfangsrichtung der Stützrolle 13 von einem maximalen Querschnitt eines Nutabschnittes 38/1 bis auf einen minimalen Querschnitt eines Nutabschnittes 38/20 ab. Dabei erfolgt die Änderung der Querschnittsgröße der Umfangsnut 34 sprungartig.

Ein gleichfalls sprungartiger Übergang ergibt sich an der Werkstückauflage 35 beim Übergang von einem der Nutabschnitte 38 auf den jeweils benachbarten. Die Werkstückauflage 35 verläuft entlang dem in Figur 5 erkennbaren Nutgrund, also entlang der Scheitellinie der Umfangsnut 34. Werden - wie in dem Beispielsfall gemäß Figur 5 vorgesehen - Rohre 2 mit kreiszylindrischem Querschnitt gelagert, so erfolgt die Werkstückabstützung an der Stützrolle 13 in dem gezeigten Beispielsfall jedenfalls am Nutgrund der Umfangsnut 34.

Aufgrund der Gliederung der Umfangsnut 34 in die Nutabschnitte 38 setzt sich die Werkstückauflage 35 aus Auflagenabschnitten 39 zusammen, die um die Rollendrehachse 14 aufeinander folgen.

Die von den einzelnen Nutabschnitten 38 ausgebildeten Auflagenabschnitte 39 sind allesamt geradlinig. Einander benachbarte Auflagenabschnitte 39 gehen unter Ausbildung von Unstetigkeitsstellen ineinander über. Der radiale Abstand der Auflagenabschnitte 39 und somit der Werkstückauflage 35 von der Rollendrehachse 14 nimmt in Umfangsrichtung der Stützrolle 13 von einem Minimalwert an dem Nutabschnitt 38/1 bis auf einen Maximalwert an dem Nutabschnitt 38/20 zu. In guter Näherung verläuft die Werkstückauflage 35 in Form einer Spirale um die Rollendrehachse 14. Aufgrund der Geometrie der Werkstückauflage 35 ist gewährleistet, dass die Achsen von Rohren, die unterschiedliche Querschnittsabmessungen besitzen und folglich unterschiedlichen Nutabschnitten 38 der Stützrolle 13 zugeordnet sind, bei Lagerung an der Stützrolle 13 den selben Abstand von der Rollendrehachse 14 aufweisen und dabei mit der Spannachse 9 des Spannfutters 8 sowie mit der Führungsachse 19 des Durchschiebefutters 18 zusammenfallen.

Bedingt wird die beschriebene Gestalt der Umfangsnut 34 an der Stützrolle 13 durch das bei der Herstellung der Umfangsnut 34 angewandte Verfahren.

So wurde die Umfangsnut 34 aus dem vollen Material eines kreiszylindrischen Rohlings für die Stützrolle 13 herausgefräst. In Figur 5 angedeutet ist eine Drehachse 40 der zur Herstellung der Umfangsnut 34 eingesetzten Fräswerkzeuge. Die Fräswerkzeuge besaßen zylindrische Gestalt. Die Achsen der zylindrischen Fräswerkzeuge fielen mit der Drehachse 40 zusammen. Eine Vorschubrichtung 41, in welcher die Fräswerkzeuge relativ zu dem Rohling für die Stützrolle 13 bewegt wurden, ist in Figur 5 durch einen Pfeil veranschaulicht. Für jeden Nutabschnitt 38 der Umfangsnut 34 wurde ein eigenes Fräswerkzeug verwendet. Der Radius des jeweiligen Fräswerkzeuges entsprach dem Radius des betreffenden Nutabschnittes 38 der Umfangsnut 34. Alternativ hätte ein einziges Fräswerkzeug beispielsweise mit dem Radius des Nutabschnittes 38/20 eingesetzt werden können. Zur Erstellung des Nutabschnittes 38/20 hätte dieses Fräswerkzeug in einer parallel zu der Rollendrehachse 14 verlaufenden Bewegungsebene lediglich in Vorschubrichtung 41 bewegt werden müssen. Die Herstellung der übrigen Nutabschnitte 38 hätte in der genannten Bewegungsebene eine mehrachsige Bewegung des Fräswerkzeuges gegenüber dem Rohling für die Stützrolle 13 erfordert. Im Interesse einer Gewichtsminimierung wurden bei der Herstellung der Stützrollen 13 alle nicht funktionsnotwendigen Bereiche des Stützrollen-Rohlings abgetragen. Belassen wurden die Seitenwände 36, 37 der Umfangsnut 34 sowie ein kreiszylindrischer Lagerteil 47 (Figur 4), über welchen die Stützrolle 13 an der Tragstruktur 15 der Rohrunterstützung 12 gelagert ist.

Auch die Funktionsweise der Stützrollen 13 der Einrichtung 11 zur Werkstückabstützung kann im Einzelnen Figur 5 entnommen werden.

Figur 5 zeigt ein und dieselbe Stützrolle 13 mit zwei unterschiedlichen Dreheinstellungen. Bei der Dreheinstellung der linken Teildarstellung von Figur 5 dient der Nutabschnitt 38/1, d.h. derjenige der Nutabschnitte 38, welcher den größten Nutquerschnitt aufweist, zur Lagerung des Rohres 2 in Schwerkraftrichtung. Das Rohr 2 weist den maximalen Durchmesser auf, der mit der maschinellen Anordnung 1 bearbeitet werden kann. In vertikaler Richtung klemmende Spannbacken 42, 43 des Spannfutters 8 an der Dreh- /Vorschubstation 6 beaufschlagen das Rohr 2 an seiner Außenwand. Die Rohrachse 17 des Rohres 2 ist aufgrund der gewählte Dreheinstellung der Stützrolle 13 in vertikaler Richtung derart angeordnet, dass sie mit der Spannachse 9 des Spannfutters 8 zusammenfällt.

Soll anstelle des Rohres 2 ein Rohr 2' bearbeitet werden, so ist die Stützrolle 13 aus der Drehstellung gemäß der linken Teildarstellung von Figur 5 in die Drehstellung gemäß der rechten Teildarstellung von Figur 5 zuzustellen. Zu diesem Zweck wird der motorische Antrieb 26 betätigt. Numerisch gesteuert wird die Stützrolle 13 in der linken Teildarstellung von Figur 5 in Umfangsrichtung zugestellt, bis ein Nutabschnitt 38/10 der Umfangsnut 34 mit seinem Nutgrund waagerecht ausgerichtet ist. Der Nutabschnitt 38/10 besitzt einen Radius, der mit dem Radius des Rohres 2' in etwa identisch ist. Ebenso wie zuvor das Rohr 2 in dem Nutabschnitt 38/1 ist nun das Rohr 2' in dem Nutabschnitt 38/10 der Umfangsnut 34 sowohl in Schwerkraftrichtung als auch seitlich abgestützt. Eine Rohrachse 17' des Rohres 2' fällt mit der Spannachse 9 des Spannfutters 8 der Dreh-/Vorschubstation 6 zusammen.

Sowohl das Rohr 2 als auch das Rohr 2' wird im Anschluss an seine klemmende Fixierung mittels des Spannfutters 8 durch Verfahren der Dreh-/Vorschubstation 6 und/oder durch Drehen des Spannfutters 8 in der für die durchzuführende Bearbeitung erforderlichen Weise gegenüber dem Laserschneidkopf 20 bewegt. Die Stützrolle 13 behält bei dieser Bewegung des Rohres 2 bzw. des Rohres 2' ihre Dreheinstellung unverändert bei. Bei axialen und bei Drehbewegungen gleiten die Rohre 2, 2' über die Wand des jeweiligen Nutabschnittes 38/1, 38/10 der Umfangsnut 34 an der Stützrolle 13.

Die Nutabschnitte 38 sind über den Außenumfang der Stützrolle 13 derart verteilt, dass diejenigen Nutabschnitte 38, welche dem zur Lagerung des Rohres 2, 2' genutzten Nutabschnitt benachbart sind und einen kleineren Nutquerschnitt als dieser aufweisen, mit ihren Nutseitenwänden, in der Ansicht in Umfangsrichtung der Stützrolle 13, nicht innerhalb der Nutseitenwände des zur Rohrlagerung verwendeten Nutabschnittes liegen.

Wird bei den Verhältnissen gemäß der rechten Teildarstellung von Figur 5 das Rohr 2' nach links, also zu dem Laserschneidkopf 20 hin bewegt und wird dabei ungewollt die Stützrolle 13 durch das sich axial bewegende Rohr 2' geringfügig im Gegenuhrzeigersinn gedreht, so bleiben sowohl die Führung des Rohres 2' an der Stützrolle 13 als auch die axiale Beweglichkeit des Rohres 2' gegenüber der Stützrolle 13 erhalten. Aufgrund der Ausdehnung des Nutabschnittes 38/10 in Umfangsrichtung der Stützrolle 13 ist die Führung des Rohres 2' durch den Nutabschnitt 38/10 auch dann gewährleistet, wenn die Stützrolle 13 ihre Dreheinstellung gemäß Figur 5 geringfügig im Gegenuhrzeigersinn verlässt. Nachdem der Querschnitt der Umfangsnut 34 entgegen der Vorschubrichtung des Rohres 2' zunimmt, bewirkt ein geringfügiges Drehen der Stützrolle 13 im Gegenuhrzeigersinn, dass Nutabschnitte 38 zu dem Rohr 2' hin gedreht werden, deren Radius größer ist als der Radius des Rohres 2' und welche das Rohr 2' daher nicht klemmen. Die mit der geringfügigen Drehbewegung der Stützrolle 13 verbundene vertikale Verlagerung des Rohres 2' ist vernachlässigba r.

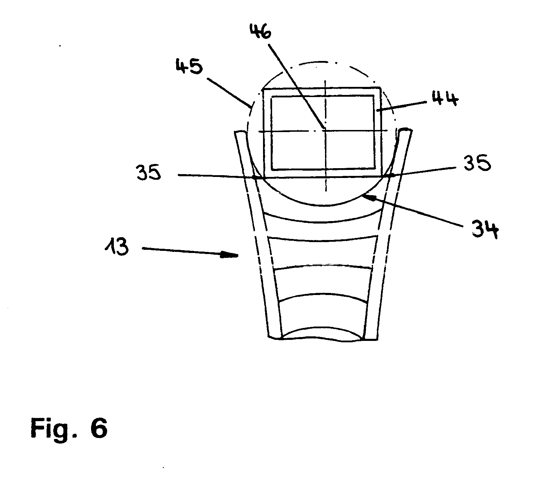

Ausweislich Figur 6 ist der Einsatz der Stützrolle 13 nicht auf Rohre 2, 2' mit Kreisquerschnitt beschränkt. Mittels der Stützrolle 13 können vielmehr beliebige rotationssymmetrische Profile, beispielsweise auch Rechteckprofile 44, unterfangen werden. Zur Lagerung des Rechteckprofils 44 dient derjenige der Nutabschnitte 38 dessen Radius mit dem Radius eines Hüllkreises 45 des Rechteckprofils 44 übereinstimmt. Die Werkstückauflage 35 verläuft in dem Beispielsfall gemäß Figur 6 linienförmig an einander gegenüberliegenden Seiten des zur Lagerung des Rechteckprofils 44 genutzten Nutabschnittes. Damit das Rechteckprofil 44 mit seinem hinteren Ende an dem Spannfutter 8 zentriert eingespannt werden kann, muss eine Profilachse 46 durch entsprechende Dreheinstellung der Stützrolle 13 in die Spannachse 9 des Spannfutters 8 gelegt werden. Außerdem muss die Profilachse 46 mit der Führungsachse 19 des Durchschiebefutters 18 zusammenfallen.

## Patentansprüche

1. Maschinelle Anordnung zum Bearbeiten von stabartigen Werkstücken, insbesondere von Rohren (2, 2'),
• mit einer Bearbeitungseinrichtung (20) für die Werkstückbearbeitung,
• mit einer Werkstück-Bewegungseinrichtung (6), mittels derer zu bearbeitende Werkstücke (2, 2') und/oder bearbeitete Werkstücke (2, 2') relativ zu der Bearbeitungseinrichtung (20) bewegbar sind sowie
• mit einer Einrichtung (11) zur Werkstückabstützung, mittels derer ein Werkstück (2, 2') entgegen der Schwerkraftwirkung in Werkstückquerrichtung und dabei mit einer zu der Bearbeitungseinrichtung (20) hin und/oder gegenüber der Werkstück-Bewegungseinrichtung (6) in vertikaler Richtung eingenommenen vertikalen Solllage abstützbar ist,
wobei die Einrichtung (11) zur Werkstückabstützung wenigstens eine Stützrolle (13) aufweist, die mit einer horizontalen Drehachse (14) in Werkstückquerrichtung ausgerichtet ist und die an ihrem um die Rollendrehachse (14) verlaufenden Außenumfang eine Werkstückauflage (35) aufweist, an welcher die vertikale Solllage einnehmende Werkstücke (2, 2') entgegen der Schwerkraftwirkung abstützbar sind,
**dadurch gekennzeichnet, dass**
die Werkstückauflage (35) an dem Außenumfang der Stützrolle (13) mit sich änderndem radialen Abstand von der Rollendrehachse (14) ("Achsabstand") um die Rollendrehachse (14) verläuft und dass die Stützrolle (13) gesteuert um die Rollendrehachse (14) drehbar und dadurch in unterschiedliche Drehstellungen zustellbar ist.

2. Maschinelle Anordnung nach Anspruch 1, **dadurch gekennzeichnet, dass** die Werkstückauflage (35) an dem Außenumfang der Stützrolle (13) eine Mehrzahl von geradlinigen Auflagenabschnitten (39) aufweist, die um die Rollendrehachse (14) aufeinander folgen und die einen unterschiedlichen Achsabstand besitzen.

3. Maschinelle Anordnung nach einem der vorhergehenden Ansprüche, **dadurch gekennzeichnet, dass** die Werkstückauflage (35) an dem Außenumfang der Stützrolle (13) spiralförmig um die Rollendrehachse (14) verläuft.

4. Maschinelle Anordnung nach einem der vorhergehenden Ansprüche, **dadurch gekennzeichnet, dass** die Werkstückauflage (35) an dem Außenumfang der Stützrolle (13) von der Wand einer um die Rollendrehachse (14) verlaufenden und radial nach außen offenen Umfangsnut (34) der Stützrolle (13) ausgebildet ist.

5. Maschinelle Anordnung nach einem der vorhergehenden Ansprüche, **dadurch gekennzeichnet, dass** die Umfangsnut (34) der Stützrolle (13) einen Nutquerschnitt aufweist, dessen Größe mit zunehmendem Achsabstand der Werkstückauflage (35) an dem Außenumfang der Stützrolle (13) abnimmt, wobei die Abnahme der Größe des Nutquerschnittes auf die Zunahme des Achsabstandes abgestimmt ist.

6. Maschinelle Anordnung nach einem der vorhergehenden Ansprüche, **dadurch gekennzeichnet, dass** die Umfangsnut (34) der Stützrolle (13) eine Mehrzahl von Nutabschnitten (38) aufweist, die um die Rollendrehachse (14) aufeinander folgen und die einen unterschiedlich großen Nutquerschnitt besitzen, wobei sich jeder der Nutabschnitte (38) mit einem konstanten Nutquerschnitt über einen begrenzten Umfangswinkel um die Rollendrehachse (14) erstreckt.

7. Maschinelle Anordnung nach einem der vorhergehenden Ansprüche, **dadurch gekennzeichnet, dass** die Umfangsnut (34) der Stützrolle (13) als Nutquerschnitt einen Kreissegmentquerschnitt aufweist.

8. Maschinelle Anordnung nach einem der vorhergehenden Ansprüche, **dadurch gekennzeichnet, dass** die Stützrolle (13) in vertikaler Richtung anhebbar und/oder absenkbar ist.

9. Maschinelle Anordnung nach einem der vorhergehenden Ansprüche, **dadurch gekennzeichnet, dass** die Stützrolle (13) mittels eines steuerbaren motorischen Antriebes (26) gesteuert um die Rollendrehachse (14) drehbar und dadurch in unterschiedliche Drehstellungen zustellbar ist.

10. Maschinelle Anordnung nach einem der vorhergehenden Ansprüche, **dadurch gekennzeichnet, dass** eine Mehrzahl von Stützrollen (13) vorgesehen sind, von denen wenigstens zwei mittels eines gemeinsamen steuerbaren Antriebsmotors (29) gesteuert um die Rollendrehachse (14) drehbar und dadurch in unterschiedliche Drehstellungen zustellbar sind.

## Claims

1. A mechanical arrangement for processing rod-like workpieces, especially pipes (2, 2'),
• having a processing device (20) for processing a workpiece,
• having a workpiece-moving device (6) by means of which workpieces (2, 2') to be processed and/or processed workpieces (2, 2') are movable relative to the processing device (20), and
• having a device (11) for supporting a workpiece, by means of which a workpiece (2, 2') can be supported in the transverse direction of the workpiece counter to the effect of gravity and at the same time in a vertical desired position adopted in the vertical direction towards the processing device (20) and/or relative to the workpiece-moving device (6),
wherein the device (11) for supporting a workpiece has at least one support roller (13) which is oriented with a horizontal rotation axis (14) in the transverse direction of the workpiece and which has at its outer periphery extending about the roller rotation axis (14) a workpiece rest (35) on which workpieces (2, 2') adopting the vertical desired position can be supported counter to the effect of gravity,
**characterised in that**
the workpiece rest (35) at the outer periphery of the support roller (13) extends about the roller rotation axis (14) at a changing radial distance from the roller rotation axis (14) ("centre distance"), and the support roller (13) is rotatable about the roller rotation axis (14) in a controlled manner and is thereby positionable in different rotational positions.

2. A mechanical arrangement according to claim 1, **characterised in that** the workpiece rest (35) at the outer periphery of the support roller (13) has a plurality of linear rest portions (39) which follow one another about the roller rotation axis (14) and which have a differing centre distance.

3. A mechanical arrangement according to either of the preceding claims, **characterised in that** the workpiece rest (35) at the outer periphery of the support roller (13) extends spirally about the roller rotation axis (14).

4. A mechanical arrangement according to any one of the preceding claims, **characterised in that** the workpiece rest (35) at the outer periphery of the support roller (13) is formed by the wall of a radially outwardly open circumferential groove (34) of the support roller (13), which circumferential groove (34) extends about the roller rotation axis (14).

5. A mechanical arrangement according to any one of the preceding claims, **characterised in that** the circumferential groove (34) of the support roller (13) has a groove cross-section which decreases in size with increasing centre distance of the workpiece rest (35) at the outer periphery of the support roller (13), wherein the decrease in size of the groove cross-section is coordinated with the increase in the centre distance.

6. A mechanical arrangement according to any one of the preceding claims, **characterised in that** the circumferential groove (34) of the support roller (13) has a plurality of groove portions (38) which follow one another about the roller rotation axis (14) and which have a groove cross-section of differing size, wherein each of the groove portions (38) extends about the roller rotation axis (14) with a constant groove cross-section over a limited circumferential angle.

7. A mechanical arrangement according to any one of the preceding claims, **characterised in that** the circumferential groove (34) of the support roller (13) has as the groove cross-section the cross-section of a segment of a circle.

8. A mechanical arrangement according to any one of the preceding claims, **characterised in that** the support roller (13) can be raised and/or lowered in the vertical direction.

9. A mechanical arrangement according to any one of the preceding claims, **characterised in that** the support roller (13) is rotatable about the roller rotation axis (14) in a controlled manner by means of a controllable motor drive (26) and is thereby positionable in different rotational positions.

10. A mechanical arrangement according to any one of the preceding claims, **characterised in that** a plurality of support rollers (13) are provided, at least two of which are rotatable about the roller rotation axis (14) in a controlled manner by means of a common controllable drive motor (29) and are thereby positionable in different rotational positions.

## Revendications

1. Agencement mécanique pour le traitement de pièces à usiner du type barre, notamment de tubes (2, 2'), comprenant
• un système d'usinage (20) dédié à l'usinage des pièces,
• un système (6) de mise en mouvement des pièces, au moyen duquel des pièces (2, 2') à usiner, et/ou des pièces usinées (2, 2'), sont mobiles par rapport audit système d'usinage (20),
• ainsi qu'un système (11) d'appui des pièces, au moyen duquel un appui peut être procuré à une pièce (2, 2') en opposition à l'action d'une force de gravité dans la direction transversale de ladite pièce occupant alors une position verticale de consigne prise verticalement en direction dudit système d'usinage (20), et/ou vis-à-vis dudit système (6) de mise en mouvement des pièces,
ledit système (11) d'appui des pièces présentant au moins un rouleau d'appui (13) qui est orienté dans la direction transversale des pièces avec un axe horizontal de rotation (14) et offre, sur son pourtour extérieur s'étendant autour dudit axe de rotation (14) dudit rouleau, un support (35) de pièces sur lequel des pièces (2, 2'), prenant la position verticale de consigne, peuvent prendre appui en opposition à l'action de la force de gravité,
**caractérisé par le fait que**
ledit support (35) de pièces s'étend sur le pourtour extérieur du rouleau d'appui (13), autour de l'axe de rotation (14) dudit rouleau, avec variation de la distance radiale vis-à-vis dudit axe de rotation (14) ("entraxe") ; et **par le fait que** ledit rouleau d'appui (13) peut effectuer des rotations commandées autour de l'axe de rotation (14) dudit rouleau, et peut par conséquent être présenté dans différentes positions prises par rotation.

2. Agencement mécanique selon la revendication 1, **caractérisé par le fait que** le support (35) de pièces sur le pourtour extérieur du rouleau d'appui (13) comporte une pluralité de segments rectilignes de support (39) qui se succèdent mutuellement autour de l'axe de rotation (14) dudit rouleau, et possèdent un entraxe différent.

3. Agencement mécanique selon l'une des revendications précédentes, **caractérisé par le fait que** le support (35) de pièces sur le pourtour extérieur du rouleau d'appui (13) s'étend spiroïdalement autour de l'axe de rotation (14) dudit rouleau.

4. Agencement mécanique selon l'une des revendications précédentes, **caractérisé par le fait que** le support (35) de pièces sur le pourtour extérieur du rouleau d'appui (13) est matérialisé par la paroi d'une gorge circonférentielle (34) dudit rouleau d'appui (13) qui s'étend autour de l'axe de rotation (14) dudit rouleau, et est ouverte vers l'extérieur dans le sens radial.

5. Agencement mécanique selon l'une des revendications précédentes, **caractérisé par le fait que** la gorge circonférentielle (34) du rouleau d'appui (13) présente une section transversale dont la taille décroît au fur et à mesure de l'augmentation de l'entraxe du support (35) de pièces sur le pourtour extérieur dudit rouleau d'appui (13), sachant que la décroissance de la taille de la section transversale de ladite gorge est coordonnée avec l'augmentation dudit entraxe.

6. Agencement mécanique selon l'une des revendications précédentes, **caractérisé par le fait que** la gorge circonférentielle (34) du rouleau d'appui (13) offre une pluralité de segments (38) qui se succèdent mutuellement autour de l'axe de rotation (14) dudit rouleau et possèdent une section transversale différemment grande, chacun desdits segments (38) de la gorge s'étendant avec section transversale constante autour dudit axe de rotation (14) du rouleau, sur un angle périphérique délimité.

7. Agencement mécanique selon l'une des revendications précédentes, **caractérisé par le fait que** la gorge circonférentielle (34) du rouleau d'appui (13) présente, en tant que section transversale, une section transversale en secteur circulaire.

8. Agencement mécanique selon l'une des revendications précédentes, **caractérisé par le fait que** le rouleau d'appui (13) peut être soulevé et/ou abaissé dans la direction verticale.

9. Agencement mécanique selon l'une des revendications précédentes, **caractérisé par le fait que** le rouleau d'appui (13) peut tourner autour de l'axe de rotation (14) dudit rouleau, avec pilotage au moyen d'un entraînement motorisé commandable (26), et peut ainsi être présenté dans différentes positions prises par rotation.

10. Agencement mécanique selon l'une des revendications précédentes, **caractérisé par** la présence d'une pluralité de rouleaux d'appui (13) dont au moins deux peuvent tourner autour de l'axe de rotation (14) avec pilotage au moyen d'un moteur commun d'entraînement (29) pouvant être commandé, et peuvent ainsi être présentés dans différentes positions prises par rotation.
